# EUROPÄISCHE PATENTSCHRIFT

(11) **EP 0 841 139 B1**
(45) Veröffentlichungstag und Bekanntmachung des Hinweises auf die Patenterteilung: **04.10.2001**
(21) Anmeldenummer: 97119205.9
(22) Anmeldetag: 04.11.1997
(51) Int. Cl.: B29C 33/28, B29C 33/30

(54) **Vorrichtung zum Herstellen von Kunststoffteilen**
Apparatus for producing plastic articles
Dispositif pour la fabrication d'objets en matière plastique

(30) Priorität: 12.11.1996 DE 19646592
(43) Veröffentlichungstag der Anmeldung: 13.05.1998
(73) Patentinhaber: Krauss-Maffei Kunststofftechnik GmbH, 80997 München (DE)
(72) Erfinder: Laar, Erwin, 83607 Holzkirchen (DE)
(74) Vertreter: Rucker, Bernd

(56) Entgegenhaltungen:
- EP-A- 0 281 724
- EP-A- 0 510 406

## Beschreibung

Die Erfindung bezieht sich auf eine Vorrichtung zum Herstellen von Kunststoffteilen, insbesondere von Kunststoffteilen aus reaktiven Kunststoffkomponenten, mit einer oberen und einer unteren Formaufspannplatte, die jeweils eine einen Formhohlraum einschließende Formhälfte tragen, mit einem die obere und die untere Formaufspannplatte tragenden Grundrahmen und mit zwischen der oberen und der unteren Formaufspannplatte sowie der unteren Formaufspannplatte und dem Grundrahmen angeordneten Gelenkverbindungen, mittels derer die obere und die untere Formaufspannplatte in eine öffnungs- und eine Schließstellung auf- und zuklappbar ist und die obere und die untere Formaufspannplatte gegenüber dem Grundrahmen verschwenkbar ist, und mit Antriebseinrichtungen zur Bewerkstelligung der Öffnungs- und Schließbewegung sowie der Schwenkbewegung.

Bei bekannten Vorrichtungen dieser Art sind die Gelenke zwischen unterer und oberer Formträgerplatte nur auf der der Bedienperson abgewandten Seite angeordnet, so daß sich die obere und die untere Formträgerplatte zur Bedienperson öffnen und diese an der geöffneten Form Arbeitsschritte, wie Eintrag eines reaktionsfähigen Kunststoffgemisches, Zufuhr von Einlegeteilen oder Deckschichten, Entnahme des fertigen Kunststoffteils und dergleichen ausführen kann. Hierbei sind die geöffneten Formen nur von einer Seite zugänglich, wobei, um eine Zugänglichkeit von zwei Seiten möglich zu machen, aufwendige Schwenkvorrichtungen vorgesehen werden müssen, mit denen die Form um 180° geschwenkt werden kann.

Der Erfindung liegt daher die Aufgabe zugrunde, bei den Vorrichtungen der genannten Art mit einfachen Mitteln den Zugang zur geöffneten Form von zwei Seiten und in ergonomisch optimaler Weise zu ermöglichen.

Diese Aufgabe wird durch die Merkmale des Patentanspruchs 1 gelöst. Dadurch, daß entweder die Gelenkverbindung der einen oder der anderen Seite in Funktion gesetzt wird und die jeweils gegenüberliegende Gelenkverbindung entriegelt wird, kann mit einfach wirkenden Ver- und Entriegelelementen eine Bedienbarkeit der Form von zwei Seiten erreicht werden. Es können somit an einer Seite Maschinen zur Beschickung der offenen Form mit reaktivem Kunststoffgemisch angeordnet werden, wohingegen auf der anderen Seite das Bedienpersonal ungestört von maschinellen Beschickungseinrichtungen die fertigen Kunststoffteile entnehmen kann.

In einer vorteilhaften Ausgestaltung der Erfindung sind auch die untere Formaufspannplatte und der Grundrahmen über jeweils zwei einander gegenüberliegende Gelenkverbindungen wahlweise miteinander verbindbar, so daß die untere Formaufspannplatte zusammen mit der oberen Formaufspannplatte nach der einen oder der anderen Seite geschwenkt werden kann, wodurch die untere Formaufspannplatte bei geöffneter Form für die Bedienperson in eine ergonomisch günstigere Neigungsstellung gebracht werden kann.

Weitere vorteilhafte Ausbildungen der Erfindung ergeben sich aus den Unteransprüchen.

Die Erfindung wird nachfolgend anhand eines in der Zeichnung dargestellten Ausführungsbeispiels erläutert. Es zeigen in der Seitenansicht
- Fig. 1: den im wesentlichen aus Grundrahmen und unterer und oberer Formaufspannplatte bestehenden Formträger in der Füllstellung mit hochgeschwenkter oberer Formenaufspannplatte,
- Fig. 2: den Formenträger nach Fig. 1 jedoch mit geschlossener oberer Formaufspannplatte,
- Fig. 3: die obere und die untere Formaufspannplatte in geschlossener Form in gegenüber dem Grundrahmen geschwenkter Position,
- Fig. 4: die obere Formaufspannplatte in aufgeklappter Position und mit zur Bedienperson geschwenkter unterer Formaufspannplatte.

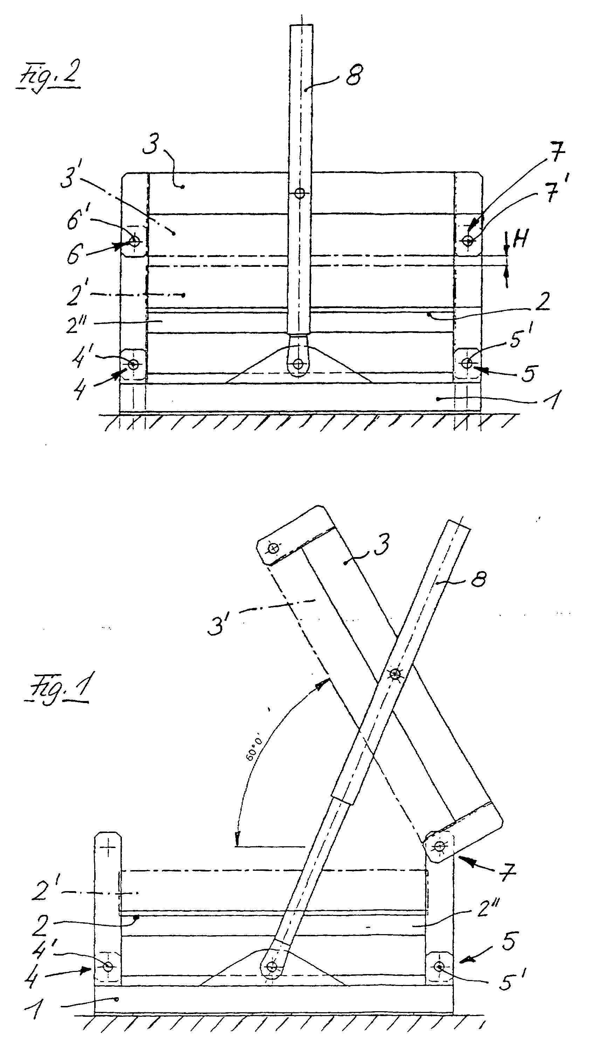

Gemäß Fig. 1 sind über einem rechteckigen Grundrahmen 1 jeweils in Tragrahmen eine untere und eine obere Formaufspannplatte 2 und 3 angeordnet. Alle drei Funktionselemente sind sowohl auf der linken als auch auf der rechten Seite, über Gelenkverbindungen 4 und 5 sowie 6 und 7 verbindbar, die jeweils aus zwei Gelenken bestehen, von denen in der Zeichnung wegen der Seitenansichtsdarstellung nur ein Gelenk zu sehen ist.

Die Gelenkverbindungen 4 bis 7 sind wahlweise, beispielsweise mittels elektromagnetisch oder hydraulisch betätigter Gelenkbolzen 4' bis 7', in eine Funktionsstellung, in der die Gelenkverbindungen als Gelenk wirken, oder in eine Funktionsstellung schaltbar, in der die Gelenkverbindung entriegelt ist.

Am Grundrahmen 1 und an der oberen Formaufspannplatte 3 sind zu beiden Seiten je eine hydraulische Kolben-Zylindereinheit 8 angelenkt.

Die Formträgerplatten 2 und 3 tragen jeweils in strichpunktierten Linien dargestellte Formhälften 2' und 3', die beim Öffnen der Form zunächst gegenüber den Formaufspannplatten 2 und 3 um einen begrenzten senkrechten Hub H verstellbar sind, um beim Auseinanderklappen der oberen und der unteren Formaufspannplatte im fertigen Kunststoffteil ausgeformte Hinterschneidungen nicht zu beschädigen.

Zwischen der unteren Formaufspannplatte und dem Tragrahmen befindet sich ein Zwischenraum 2'' für ein Luftkissen (nicht dargestellt), mit dem der Hub H und der Schließdruck bewerkstelligt wird.

In der Funktionsstellung nach Fig. 1 sind die Gelenke 4, 5 und 7 geschlossen und der obere Formträger 3 wird mit der hydraulischen Kolben-Zylindereinheit 8 um das Gelenk 7 verschwenkt. Die untere Formaufspannplatte 2 befindet sich in horizontaler Position, so daß deren untere Formhälfte 2' von der linken Seite mit dem Gemisch aus reaktiven Kunststoffkomponenten gefüllt werden kann.

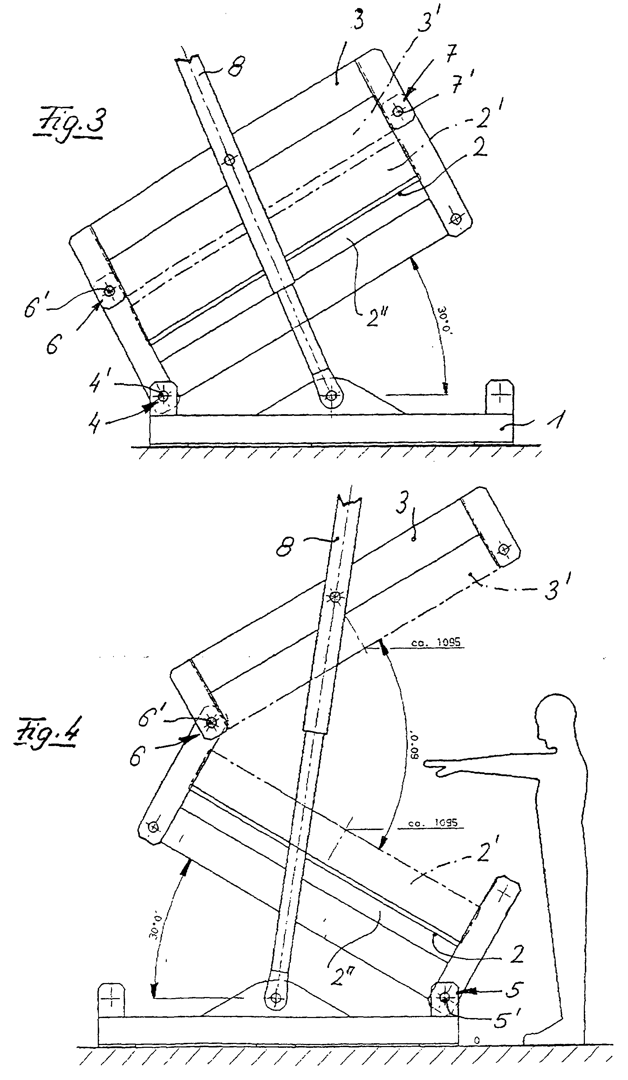

Die Fig. 2 zeigt die Funktionsstellung, in der sämtliche Gelenke 4 bis 7 geschlossen sind und in der das vorher in den Formhohlraum eingebrachte Kunststoffkomponentengemisch ausreagiert.

In der Funktionsstellung nach Fig. 3 sind bis auf das Gelenk 5 die Gelenke 4, 6 und 7 geschlossen und die geschlossene obere und untere Formaufspannplatte 2 und 3 sind mittels der hydraulischen Kolben-Zylindereinheit 8 um das Gelenk 4 verschwenkt. Durch das Verschwenken kann ein Entweichen von Luft aus dem Formhohlraum bewirkt werden, so daß das in den Formhohlraum eingebrachte reaktive Kunststoffkomponentengemisch vollständig in gleichmäßiger Verteilung ausreagieren kann.

In der Funktionsstellung nach Fig. 4 sind die Gelenke 5 und 6 geschlossen. Durch die hydraulische Kolben-Zylindereinheit 8 wird die untere Formaufspannplatte 2 gegenüber dem Grundrahmen 1 verschwenkt und die obere Formaufspannplatte 3 wird gegenüber der unteren Formaufspannplatte 2 verschwenkt. Die Form ist somit zur rechten Seite geöffnet, wobei durch die Schrägstellung der unteren Formaufspannplatte 5 die Entnahme des fertigen Kunststoffteils in einer für die Bedienperson ergonomisch angepaßten Weise erfolgen kann.

## Patentansprüche

1. Vorrichtung zum Herstellen von Kunststoffteilen, insbesondere von Kunststoffteilen aus reaktiven Kunststoffkomponenten, mit einer oberen und einer unteren Formaufspannplatte, die jeweils eine einen Formhohlraum einschließende Formhälfte tragen, mit einem die obere und die untere Formaufspannplatte tragenden Grundrahmen und mit zwischen der oberen und der unteren Formaufspannplatte sowie der unteren Formaufspannplatte und dem Grundrahmen angeordneten Gelenkverbindungen, mittels derer die obere und die untere Formaufspannplatte in eine Öffnungs- und eine Schließstellung auf- und zuklappbar ist und die obere und die untere Formaufspannplatte gegenüber dem Grundrahmen verschwenkbar ist, und mit Antriebseinrichtungen zur Bewerkstelligung der Öffnungs- und Schließbewegung sowie der Schwenkbewegung, **dadurch gekennzeichnet, daß** zwischen oberer und unterer Formaufspannplatte (2 und 3) jeweils zwei Gelenkverbindungen (6 und 7) in Gegenüberstellung angeordnet sind, deren Gelenkmechanismen wahlweise in eine Gelenkstellung und in eine Gelenk-Entriegelstellung schaltbar sind.

2. Vorrichtung nach Anspruch 1, **dadurch gekennzeichnet, daß** zwischen unterer Formaufspannplatte (2) und Grundrahmen (1) jeweils zwei Gelenkverbindungen (4 und 5) in Gegenüberstellung angeordnet sind, deren Gelenkmechanismen wahlweise in eine Gelenkstellung und in eine Gelenk-Entriegelstellung schaltbar sind.

3. Vorrichtung nach einem der Ansprüche 1 oder 2, **dadurch gekennzeichnet, daß** die Antriebseinrichtung aus einer linearen Stelleinheit besteht, die am Grundrahmen (1) und an der oberen Formaufspannplatte (3) angelenkt ist.

4. Vorrichtung nach Anspruch 3, **dadurch gekennzeichnet, daß** die lineare Stelleinheit eine hydraulische Kolben-Zylindereinheit (8) ist.

## Claims

1. Device for producing plastic articles, in particular plastic articles made of reactive plastic components, with an upper and a lower platen, each of which bears a mould half enclosing a mould cavity, with a base frame bearing the upper and the lower platen and with articulated connections between the upper and the lower platen and the lower platen and the base frame, by means of which the upper and the lower platen can be folded into an open position and a closed position and the upper and the lower platen can be pivoted relative to the base frame, and with drive devices for effecting the opening and closing movement and the pivotal movement, **characterised in that** between the upper and lower platen (2 and 3) two respective articulated connections (6 and 7) are each arranged in opposition, the articulating mechanisms of which can optionally be switched into an articulation position and an articulation unlocking position.

2. Device according to claim 1, **characterised in that** two respective articulated connections (4 and 5) are each arranged in opposition between the lower platen (2) and base frame (1), the articulating mechanisms of which articulated connections (4 and 5) can be switched optionally into an articulation position and into an articulation unlocking position.

3. Device according to any one of claims 1 or 2, **characterised in that** the drive device consists of a linear adjusting device which is joined to the base frame (1) and to the upper platen (3).

4. Device according to claim 3, **characterised in that** the linear adjusting unit is a hydraulic piston-cylinder unit (8).

## Revendications

1. Dispositif destiné à la fabrication d'objets en matière plastique, notamment d'objets en matière plastique fabriqués à partir de composants réactifs en matière plastique, présentant un plateau porte-outillage supérieur et un plateau porte-outillage inférieur qui supportent chacun un demi-moule renfermant une empreinte, avec un cadre de base supportant le plateau porte-outillage supérieur et le plateau porte-outillage inférieur et avec des assemblages à rotules disposés entre le plateau porte-outillage supérieur et le plateau porte-outillage inférieur ainsi qu'entre le plateau porte-outillage inférieur et le cadre de base, au moyen desquels le plateau porte-outillage supérieur et le plateau porte-outillage inférieur peuvent se déplier et se replier dans une position d'ouverture et de fermeture et au moyen desquels le plateau porte-outillage supérieur et le plateau porte-outillage inférieur peuvent pivoter par rapport au cadre de base, et avec des dispositifs d'entraînement destinés à effectuer le mouvement d'ouverture et de fermeture ainsi que le mouvement pivotant, **caractérisé en ce que** sont respectivement agencés dans une relation de face à face deux assemblages à rotules (6 et 7) entre les plateaux porte-outillage supérieur et inférieur (2 et 3) dont les mécanismes d'articulation peuvent au choix s'embrayer dans une position d'articulation et dans une position de désenclenchement d'articulation.

2. Dispositif selon la revendication 1, **caractérisé en ce que** sont respectivement agencés dans une relation de face à face deux assemblages à rotules (4 et 5) entre le plateau porte-outillage inférieur (2) et le cadre de base (1), dont les mécanismes d'articulation peuvent au choix s'embrayer dans une position d'articulation et dans une position de désenclenchement d'articulation.

3. Dispositif selon l'une des revendications 1 ou 2, **caractérisé en ce que** le dispositif d'entraînement se compose d'une unité de réglage linéaire qui est articulée au cadre de base (1) et au plateau porte-outillage (3) supérieur.

4. Dispositif selon la revendication 3, **caractérisé en ce que** l'unité de réglage linéaire est une unité cylindre-piston hydraulique (8).
